# EUROPÄISCHE PATENTSCHRIFT

(11) **EP 0 996 802 B1**
(45) Veröffentlichungstag und Bekanntmachung des Hinweises auf die Patenterteilung: **13.12.2006**
(21) Anmeldenummer: 98944988.9
(22) Anmeldetag: 15.07.1998
(51) Int. Cl.: E05F 15/14, H01R 41/00

(54) **AUTOMATISCHE TÜR- ODER FENSTERANLAGE**
AUTOMATIC DOOR OR WINDOW INSTALLATION
SYSTEME DE PORTE OU DE FENETRE AUTOMATIQUE

(30) Priorität: 15.07.1997 DE 19730310
(43) Veröffentlichungstag der Anmeldung: 03.05.2000
(73) Patentinhaber: GEZE GmbH, 71229 Leonberg (DE)
(72) Erfinder: HUCKER, Matthias, D-76359 Marxzell (DE); FISCHBACH, Stefan, D-71229 Leonberg (DE)
(86) Internationale Anmeldenummer: PCT/DE1998/001983
(87) Internationale Veröffentlichungsnummer: WO 1999/004122

(56) Entgegenhaltungen:
- EP-A- 0 597 208
- EP-B- 0 707 682
- WO-A-86/05836
- WO-A-94/01647
- WO-A-95/06183
- DE-A- 2 404 875
- DE-A- 3 147 273
- US-A- 2 595 291
- US-A- 4 859 193
- US-A- 4 952 855

## Beschreibung

Die Erfindung betrifft eine automatische Tür- oder Fensteranlage mit den Merkmalen des Oberbegriffs des Patentanspruchs 1.

Die gattungsbildende DE 31 47 273 A1 beschreibt eine Raumtrennwandanlage mit automatisch verfahrbaren Flügeln, mit einer elektrischen Antriebseinrichtung mit elektrischem Antriebsmotor. Die Flügel sind in einer ortsfesten Laufschiene, über den Antriebsmotor angetrieben, durch Laufrollen eines Rollenwagens verschiebbar geführt. Es ist eine als elektromotorischer Antrieb beweglicher Dichtleisten ausgebildete elektrische Zusatzeinrichtung im Flügel vorhanden. Es ist außerdem eine Stromschieneneinrichtung vorhanden, welche fünf Schienen aufweist. Eine Schiene dient als gemeinsame Masse und die weiteren Schienen jeweils entweder zur Übertragung einer Versorgungsspannung oder zur Übertragung von Daten und/oder Signalen. Außer dem offensichtlichen hohen Platzbedarf dieser fünfpoligen Stromschienenanordnung birgt diese durch die Vielzahl der Abgriffspunkte auch ein hohes Störungspotenzial, beispielsweise durch Kontaktunterbrechungen. Da jede der einzelnen Schienen entweder nur zur Übertragung einer einzigen Versorgungsspannung oder nur zur Übertragung eines einzigen Signals dient, ist die Anzahl der betreibbaren elektrischen Zusatzeinrichtungen abhängig von der Anzahl der Pole der Stromschienenanordnung und dadurch stark begrenzt.

Eine ähnlich aufgebaute Raumtrennwandanlage mit denselben Nachteilen ist in der DE 24 04 875 A1 beschrieben.

Aus der EP 0 597 208 A1 ist eine elektromotorisch angetriebene Schiebeflügelanlage bekannt. Bei den Schiebeflügeln handelt es sich um in einer Laufschiene verschiebbar geführte Trennwandelemente, die über jeweils einen separaten Antriebsmotor angetrieben sind. Die Antriebsmotoren sind jeweils auf den Rollenwagen montiert. Die Abtriebswelle des Antriebsmotors ist über einen Riementrieb und ein Planetengetriebe mit einer Welle der Laufrolle getriebemäßig gekoppelt. Die Stromversorgung der flügelfesten Antriebsmotoren erfolgt über Stromabnehmer, die eine an der Decke im Innenraum des Laufschienenprofils angeordnete Stromschiene abgreifen. Außer den Antriebsmotoren sind bei dieser Anordnung keine weiteren elektrischen Komponenten am oder im beweglichen Flügel vorgesehen, so dass die Stromschiene lediglich zur Energieübertragung zu den Antriebsmotoren dient.

Aus der EP 0 707 682 B1 ist eine weitere automatische Schiebetüranlage bekannt. An bzw. in den Flügeln sind elektrische Komponenten angeordnet, die über ein zwischen der ortsfesten Stromversorgung dem beweglichen Flügel angeordnetes Schleppkabel mit Strom versorgt werden. Das Schleppkabel lässt aufgrund seiner längenmäßigen Ausdehnung lediglich einen begrenzten Bewegungsbereich des zugehörigen Flügels zu; insbesondere Türanlagen mit gebogener oder verzweigter Laufschiene lassen sich mit dieser Anordnung nicht ohne weiteres realisieren.

Die US 4,952,855 beschreibt eine Einrichtung zur Überwachung des Schließzustands eines als Schiebeflügel ausgebildeten Verschlussorgans. An der Hauptschließkante des Schiebeflügels ist eine Schaltleiste angeordnet, wobei die Schaltkontakte beim Auftreffen des Schiebeflügels auf ein Hindernis geschlossen werden und das dabei auftretende elektrische Signal über eine induktive Übertragungseinrichtung eine ortsfesten Steuerungseinrichtung zugeleitet wird. Die Ferritkerne aufweisende induktive Übertragungseinrichtung ist Bestandteil eines elektrischen Schwingkreises und lässt daher die parallele Übertragung weiterer Daten und/oder Signale nicht zu.

In der WO 95 / 06 183 A1 ist eine Eingangstüranlage, bestehend aus zwei Karusselltüren und einer dazwischenliegenden Schiebetür, offenbart. Als elektrische Zusatzeinrichtungen sind Sensoren vorhanden, mittels derer Umgebungsbedingungen erfasst werden. Die Eingangstüranlage wird abhängig von den gemessenen Umgebungsbedingungen betrieben. Alle elektrischen Einrichtungen dieser Eingangsanlage sind jeweils separat über ortsfeste Leitungen verkabelt. Die Leitungen dienen jeweils nur der Daten- und/oder Signalübertragung zu bzw. von den elektrischen Sensoren, also nicht gleichzeitig der Energieversorgung der Antriebsmotoren.

Die US 5,063,337 beschreibt einen automatischen Schiebetürantrieb, dessen Antriebsmotor als Asynchron-Drehstrommotor ausgebildet ist. Die Frequenz der Versorgungsspannung des Asynchron-Drehstrommotor ist variabel.

In der DE 44 30 252 A1 ist eine längs einer Laufschiene verfahrbare Laufwagenanordnung beschrieben, deren Laufrollen jeweils aus einer Tragrolle und einer beim Ausfall der Tragrolle wirksam werdenden Sicherheitsrolle bestehen. Die Sicherheitsrolle ist elektrisch leitfähig und kommt bei Ausfall der Tragrolle mit der ebenfalls elektrisch leitfähigen Laufschiene in Kontakt, hierdurch ist eine elektrische Sicherheitseinrichtung auslösbar. Dieser Stromkreis dient allein der Anzeige eines Ausfalls der Tragrolle.

Die FR 2 697 569 A1 beschreibt ein eine Laufrolle aufweisendes Schiebelaufwerk, beispielsweise für Schiebetüren. Die Laufflächen der Laufrolle sowie der Laufschiene stehen mit einer Bürsteneinrichtung in Kontakt, diese entfernt auf den Laufflächen gegebenenfalls vorhandene Schmutzablagerungen.

In der DE 44 42 948 A1 ist eine Steuerungsvorrichtung für einen elektromotorischen Torantrieb offenbart. Als elektrische Zusatzeinrichtung ist ein Potentiometer vorhanden, welches zur Weg- und Geschwindigkeitserfassung des Torantriebs dient. Die elektrischen Einrichtungen dieses Antriebs sind separat über ortsfeste Leitungen verkabelt.

Die FR 2 633 003 A1 beschreibt einen Drehtürantrieb, welcher als elektrische Zusatzeinrichtungen Solarzellen, einen Akku sowie einen Funkempfänger aufweist. Die elektrischen Einrichtungen dieses Antriebs sind separat über ortsfeste Leitungen im Antriebsgehäuse verkabelt.

Der Erfindung liegt die Aufgabe zugrunde, eine automatische Tür- oder Fensteranlage zu schaffen, bei der die Signal- und/oder Datenübertragung zwischen elektrischen Zusatzeinrichtungen und/oder zwischen einer elektrischen Zusatzeinrichtung und dem elektrischen Antriebsmotor bei kompakter Bauweise funktionssicher realisiert ist, wobei die Verwendung einer Vielzahl elektrischer Zusatzeinrichtungen ermöglicht wird.

Die Aufgabe wird durch die Merkmale des Patentanspruchs 1 gelöst. Die Unteransprüche bilden vorteilhafte Ausgestaltungsmöglichkeiten der Erfindung.

Es ist eine zweipolige Stromschiene vorgesehen, die sowohl zur Stromversorgung des elektrischen Antriebsmotors und/oder mindestens einer der elektrischen Zusatzeinrichtungen als auch zur Daten- und/oder Signalübertragung zwischen elektrischen Zusatzeinrichtungen und/oder zwischen mindestens einer der elektrischen Zusatzeinrichtungen und dem elektrischen Antriebsmotor ausgebildet ist, wobei die Daten und/oder Signale zwischen den elektrischen Zusatzeinrichtungen und/oder zwischen mindestens einer der elektrischen Zusatzeinrichtungen und dem elektrischen Antriebsmotor auf die Versorgungsspannung des Antriebsmotors über eine Übertragungseinrichtung aufmodulierbar sind.

Eine erfindungsgemäß zweipolige Stromschiene weist im Vergleich zu vielpoligen Stromschienen eine kompakte Bauweise auf. Auch die Funktionssicherheit ist höher als bei vielpoligen Stromschienen, da die Anzahl der Abgriffspunkte, welche jeder für sich eine potenzielle Störungsquelle darstellen, begrenzt ist. Es wird außerdem die Verwendung einer Vielzahl elektrischer Zusatzeinrichtungen ermöglicht, denn durch das Aufmodulieren der Daten und/oder Signale auf die Versorgungsspannung lassen sich eine Vielzahl elektrischer Zusatzeinrichtungen betreiben, indem jeder einzelnen elektrischen Zusatzeinrichtung Daten und/oder Signale einer bestimmten Frequenz zugeordnet werden.

Durch die erfindungsgemäße Anordnung der Signal- und/oder Datenübertragung können aufwendige Übertragungseinrichtungen zwischen den elektrischen Komponenten, vorzugsweise entfallen, wie z.B. Schleppkabel, die eine frei wählbare Verfahrbarkeit des Flügels unter Umständen behindern könnten.

Die zur Signal- und/oder Datenübertragung vorgesehene Stromschiene kann flügelfest oder ortsfest, insbesondere an der Laufschiene angeordnet sein. Die elektrischen Komponenten können ebenfalls flügelfest oder ortsfest angeordnet sein. Die Signal- und/oder Datenübertragung kann zwischen den flügelfesten Komponenten untereinander, aber auch zwischen den ortsfesten Komponenten untereinander, insbesondere aber zwischen ortsfesten und flügelfesten Komponenten erfolgen. Der elektrische Antriebsmotor kann ortsfest oder flügelfest, insbesondere am Rollenwagen des Flügels angeordnet sein und ebenfalls in die Signal- und/oder Datenübertragung einbezogen sein.

Bei automatischen Schiebetüranlagen, die mehrere bewegte Flügel aufweisen, kann jeder Flügel jeweils mit mindestens einem eigenen Antriebsmotor versehen sein. In dieser Weise können automatische Schiebetüranlagen ausgestattet sein, die Schiebe- und Festfeldflügel aufweisen, wobei der Schiebeflügel jeweils parallel zum feststehenden Festfeldflügel geführt ist und bei geschlossener Türanlage sich eine geschlossene Türfront ergibt. Besondere Vorteile ergeben sich bei Ausführungen, bei denen eine Vielzahl von Schiebeflügeln vorgesehen sind, die in geschlossener Stellung linear nebeneinander angeordnet sind und eine geschlossene Front bilden, jedoch in geöffneter Stellung in eine z.B. rechtwinklig hierzu angeordnete Parkposition verfahrbar sind, in der die Schiebeflügel parallel zueinander stehen.

Die Stromschiene kann im Bereich des Laufschiene parallel zur Laufbahn außerhalb oder innerhalb eines Profilgehäuses der Laufschiene angeordnet sein. Es können Stromabnehmer als separate Schleifkontakte vorgesehen sein. Die Stromabnahme kann insbesondere unmittelbar über die Laufrollen erfolgen, wenn die Laufrollen auf den Stromschienen laufen. Bei der Verwendung von Schleifkontakten ist die Anordnung mehrerer hintereinander- und/oder nebeneinanderliegender Schleifkontakte pro Pol vorteilhaft, um Unterbrechungen der Energieübertragung vorzubeugen. Ferner können zusätzliche Reinigungsschleifer eingesetzt werden, die während der Bewegung des Flügels an der Stromschiene anhaftende Verunreinigungen entfernen bzw. aufnehmen.

Eine Steuerungseinrichtung des Antriebsmotors mitsamt eventueller weiterer zusätzlicher elektrischer Einrichtungen kann flügelfest oder laufschienenfest angeordnet sein.

Die Weg- und/oder Geschwindigkeitserfassung der beweglichen Flügel kann mittels eines Drehimpulsgebers erfolgen. Alternativ ist in einer bevorzugten Ausführungsform auch eine Positions- und/oder Geschwindigkeitsbestimmung der beweglichen Flügel mittels einer als Spannungsteiler ausgebildeten Stromschiene und/oder Laufschiene denkbar, wobei die an einem bestimmten Abschnitt der Stromschiene und/oder der Laufschiene abfallende Spannung zur Weg- und/oder Geschwindigkeitserfassung ausgewertet wird.

Die Rollenwagen können eine Verriegelungsvorrichtung gegen unbefugtes Bewegen der Flügel aufweisen. Beispielsweise kann die Verriegelung durch eine Verklemmung des Rollenwagens gegenüber der Laufschiene erfolgen; ebenso können die Rollenwagen unterschiedlicher Flügel eine Vorrichtung zur gegenseitigen Verriegelung aufweisen. In einer bevorzugten Ausführungsform weisen die beweglichen Flügel jeweils einen separaten Antrieb zum Anheben und Absenken des Flügels auf; durch das Anheben bzw. Absenken des Flügels kann neben der Verriegelung auch eine Abdichtung des Flügels erzielt werden.

Die Steuerungseinrichtung kann an zentraler Stelle ortsfest oder beweglich angeordnet sein, wobei die einzelnen Motoren oder Flügel nach einem "Multitasking"-Prinzip angesteuert werden können. In einer besonders bevorzugten Ausführungsform weist jeder Motor bzw. jeder angetriebene Flügel eine separate Steuerungseinrichtung auf, welche gegebenenfalls mit den Steuerungseinrichtungen weiterer angetriebener Flügel und/oder mit einer übergeordneten Steuerungseinrichtung zusammenwirken kann. Durch diese Anordnung ist ein äußerst flexibler Betrieb der Türanlage möglich.

Insbesondere bei dem Einsatz in Flucht- und Rettungswegen oder bei Brandschutztüren ist eine zuverlässige Öffnung bzw. Schließung der Tür auch bei Störungen einzelner Komponenten und/oder bei Ausfall der Energieversorgung durch des Netz notwendig. Hierzu ist eine Verwendung mehrerer Antriebsmotoren pro bewegtem Flügel und/oder pro angetriebenem Rollenwagen vorteilhaft, wobei eine Einrichtung zur Selbstdiagnose von Störungen sowie zur optischen und/oder akustischen Meldung von diagnostizierten Störungen eingesetzt werden kann.

In einer weiteren bevorzugten Ausführungsform ist im oder am Flügel mindestens ein Sensor angeordnet, welcher z.B. einen von der Temperatur, der Windstärke und/oder -richtung, der Lichtstärke, der Feuchtigkeit oder dergleichen abhängigen Betrieb ermöglicht. Ferner können im oder am Flügel angeordnete Solarzellen oder dergleichen die Energieversorgung des Antriebsmotors, der Steuerung und/oder der elektrischen Zusatzkomponenten zumindest teilweise übernehmen. Ebenso ist eine elektronische Verdunkelungseinrichtung denkbar, vorzugsweise im Bereich einer Glasscheibe des Flügels.

Die voranstehende Beschreibung bezieht sich auf die Anwendung der Erfindung bei Antrieben von Schiebetürflügeln und Raumtrennwandflügeln oder dergleichen. Insbesondere bietet sich die Anwendung der Erfindung in Raumtrennwandanlagen oder dergleichen an, wobei vorzugsweise eine Vielzahl von unabhängig voneinander antreibbaren Flügel vorgesehen ist. Es ist jedoch ebenso eine Anwendung bei Rundbogenschiebetüren, Teleskoptüren, Falttüren und Karusselltüren sowie bei entsprechenden Fenstern denkbar.

Besondere Ausführungsbeispiele der Erfindung sind in den Figuren dargestellt. Dabei zeigen:
- **Figur 1**: eine Frontansicht einer Schiebetüranlage mit zwei angetriebenen Schiebeflügeln und zwei Festfeldflügeln;
- **Figur 2**: einen Schnitt entlang Linien A-A in Figur 1;
- **Figur 3**: eine Figur 2 entsprechende Darstellung eines weiteren Ausführungsbeispiels;
- **Figur 4**: eine Figur 2 entsprechende Darstellung eines weiteren abgewandelten Ausführungsbeispiels;
- **Figur 5**: eine Figur 2 entsprechende Darstellung noch eines abgewandelten Ausführungsbeispiels;
- **Figur 6**: eine Detaildarstellung im Bereich der Laufschiene in Figur 4;
- **Figur 7**: eine Figur 2 entsprechende Darstellung eines abgewandelten Ausführungsbeispiels;
- **Figur 8**: eine obenseitige Ansicht eines Rollenwagens mit einem AußenläuferAntriebsmotor;
- **Figur 9**: eine obenseitige Ansicht eines Rollenwagens mit zwei Außenläufer-Antriebsmotoren;
- **Figur 10**: eine obenseitige Ansicht eines Rollenwagens mit zwei Antriebsmotoren mit Abtriebswelle jeweils parallel zur Bewegungsrichtung des Rollenwagens;
- **Figur 11**: eine Frontansicht des in Figur 10 dargestellten Ausführungsbeispiels;
- **Figur 12**: eine Frontansicht eines Rollenwagens mit einem Antriebsmotor mit zwei Abtriebswellen parallel zur Bewegungsrichtung des Rollenwagens;
- **Figur 13**: eine obenseitige Ansicht eines Rollenwagens mit als Rollenwagenkörper ausgebildetem Antriebsmotor mit zwei Abtriebswellen parallel zur Bewegungsrichtung des Rollenwagens;
- **Figur 14**: eine Frontansicht des in Figur 13 dargestellten Ausführungsbeispiels.

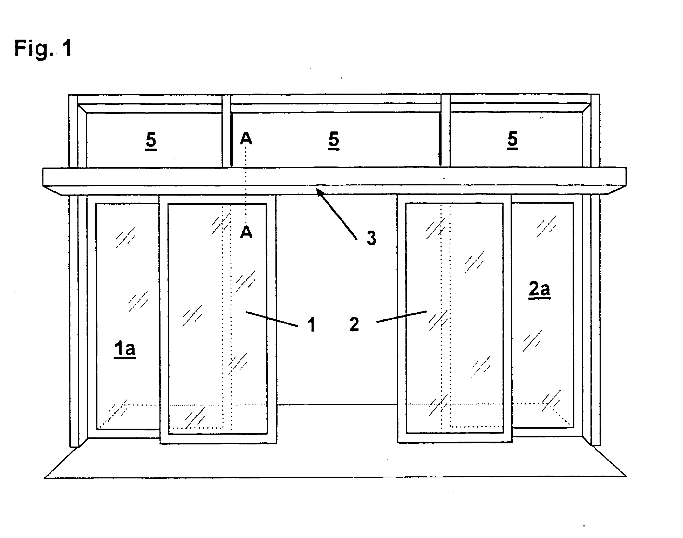

Die in **Figur 1** dargestellte Schiebetüranlage weist zwei Schiebeflügel 1, 2 auf, die in einer oberen horizontalen Laufschiene 3 verschiebbar geführt sind. Auf beiden Seiten der Türöffnung ist jeweils ein Festfeldflügel 1a, 2a ortsfest angeordnet. Über den Flügeln 1 a, 1 und 2a, 2 sind Oberlichtflügel 5 angeordnet. Sämtliche Flügel sind als Glasflügel ausgebildet, die einen Leichtmetallrahmen aufweisen oder auch als rahmenlose Flügel ausgebildet sein können.

Die Laufschiene 3 weist ein Profilgehäuse 3g auf, in welchem als Rollenwagen ein Rollenwagen 6 mit Laufrollen 6a auf Laufbahnen 3a der Laufschiene geführt sind. An den Rollenwagen 6 sind über Aufhängeschrauben 7 die Schiebeflügel 1, 2 aufgehängt. Der Rollenwagen jedes Schiebeflügels weist mindestens einen separaten Antriebsmotor 10 auf, der im Bereich des Rollenwagens 6 angeordnet ist, in dem der Antriebsmotor an dem Rollenwagenkörper befestigt ist oder den Rollenwagenkörper bildet.

An dem Rollenwagenkörper sind die Laufrollen drehbar gelagert. Sie werden über die Abtriebswelle des Antriebsmotors angetrieben. Es reicht aus, wenn eine Laufrolle oder ein Laufrollenpaar des Rollenwagens über den Antriebsmotor angetrieben wird. Weitere Laufrollen 6a des Rollenwagens oder weitere Rollenwagen des selben Schiebeflügels laufen bei der angetriebenen Schiebebewegung mit. Bei speziellen Ausführungen, z.B. Ausführungen für besonders schwere Flügel können mehrere Antriebsmotoren je Flügel vorgesehen sein, d.h. daß mehrere Laufrolle über separate Antriebsmotoren angetrieben werden. Der Rollenwagenkörper, an dem der oder die Antriebsmotoren befestigt sind, kann als Profil ausgebildet sein, das die Laufrollen trägt und mitsamt dem Antriebsmotor / den Antriebsmotoren im Hohlraum des Laufschiene aufgenommen ist.

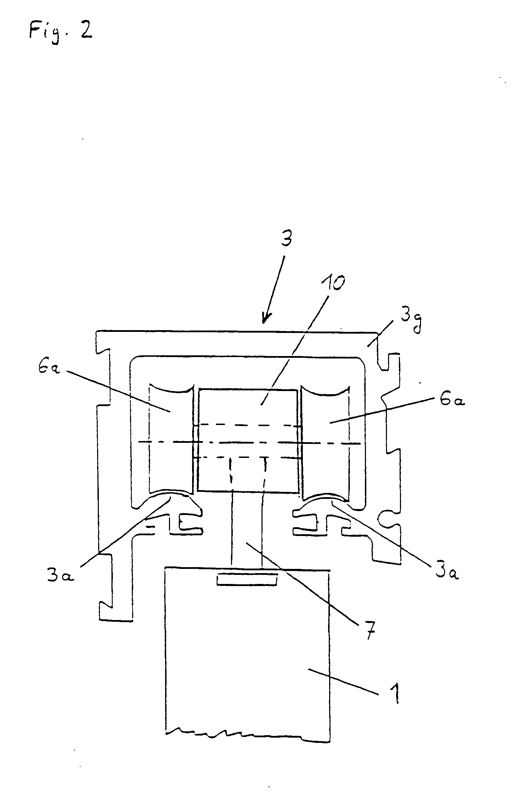

Bei dem Ausführungsbeispiel in **Figur 2** ist der Antriebsmotor 10 als der Rollenwagenkörper ausgebildet und die Abtriebswelle des Antriebsmotors liegt in der Drehachse der Laufrollen. Alternativ kann vorgesehen sein, daß die angetriebene Laufrolle als Läufer eines Außenläufermotors oder Nabenmotors ausgebildet ist.

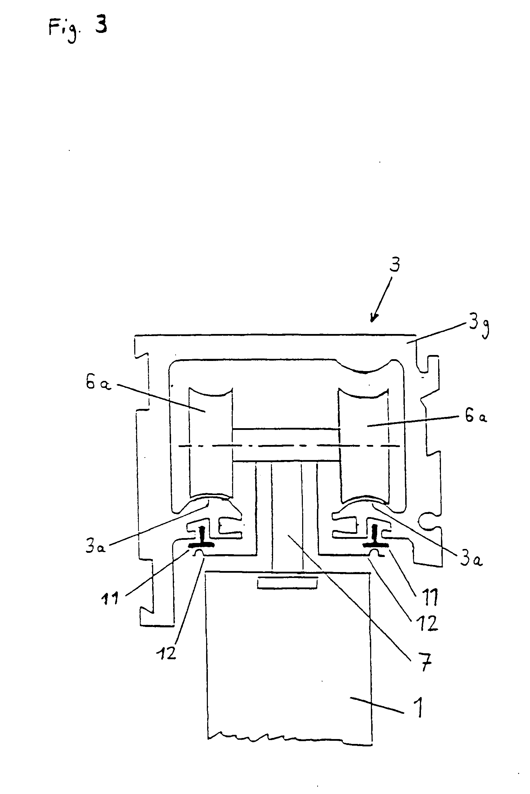

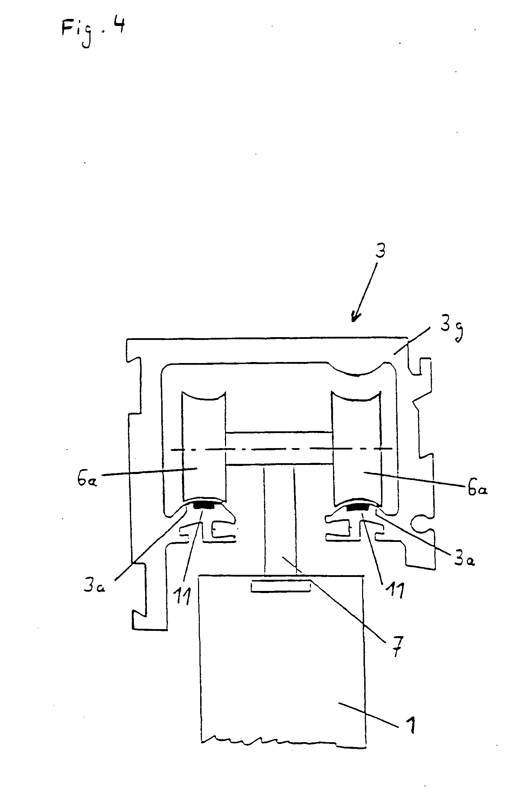

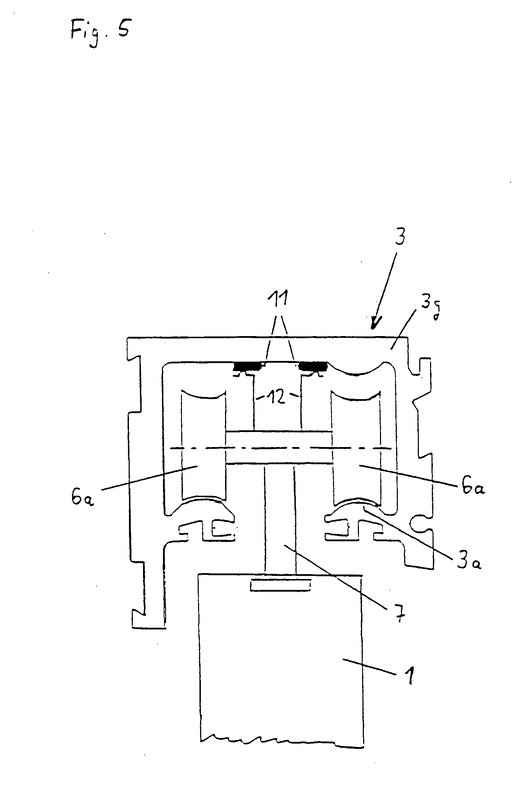

Bei dem an Ausführungsbeispiel in **Figur 3** ist im Bereich der Drehachse der Laufrollen der nicht näher dargestellte Antriebsmotor angekuppelt, z.B. am Rollenwagenkörper montiert oder in der Drehachse der Laufrollen bzw. in der Welle der Laufrollen integriert angeordnet. Entsprechendes gilt für die Ausführungen in den Figuren 4 und 5.

Die **Figuren 3** bis **5** zeigen unterschiedliche Möglichkeiten der Stromzuführung zum Antriebsmotor. In **Figur 3** ist eine Stromschiene 11 in einer Längsnut an der Unterseite des Profilgehäuses 3g angeordnet. Die Stromversorgung erfolgt durch Stromabnehmer 12, die parallel zur Aufhängeschraube 7 vom Antriebsmotor aus dem inneren Hohlraum des Profilgehäuses herausgreifen und auf der Stromschiene 11 schleifen. In **Figur 5** ist die Stromschiene 11 innerhalb des Hohlraums des Profilgehäuses angeordnet und Stromabnehmer 12 vorgesehen, die innerhalb des Hohlraums vom Antriebsmotor abstehen und an der Stromschiene schleifen.

In **Figur 4** ist die Stromschiene 11 jeweils unmittelbar im Bereich der Lauffläche innerhalb des Hohlraums des Profilgehäuses angeordnet. Die Stromabnahme erfolgt unmittelbar über die Laufrollen bzw. über in ihnen integrierte Stromabnehmer, so daß separate Stromabnehmer entfallen.

Eine elektronische Steuerungseinrichtung kann in gleicher Weise wie der Antriebsmotor mit dem Flügel mitlaufend angeordnet sein, indem die Einrichtung auf dem Rollenwagenprofil befestigt ist und vorzugsweise in der Laufschiene aufgenommen geführt ist. Alternativ kann die Steuerungseinrichtung auch laufschienenfest außerhalb der Bewegungsbahn der Schiebeflügel und der Rollenwagen angeordnet sein. Sie kann vorzugsweise innerhalb des Hohlraums der Laufschiene oder anschließend am Stirnende innerhalb oder außerhalb des Profilgehäuses, möglicherweise in einem fluchtenden Profilgehäuse oder in einer Fortsetzung des Profilgehäuses angeordnet sein. Die Einrichtung kann auch zwischen den Bewegungsbereich der Rollenwagen in der Mitte der Laufschiene angeordnet sein.

In entsprechender Anordnung wie die elektronische Steuereinrichtung kann auch eine Zusatzeinrichtung, welche beispielsweise aus Transformator und/oder Notstromversorgung, z.B. Batterie, und/oder Ansteuereinrichtung, z.B. Sensoren, und/oder Lichtschranke und/oder Wegerfassungseinrichtung und/oder Verriegelungseinrichtung besteht, entsprechend im Hohlraum angeordnet sein. Alternativ können die Steuerungseinrichtung und die Zusatzeinrichtung auch außerhalb des Hohlraums am Stirnende der Laufschiene anschließend angeordnet sein.

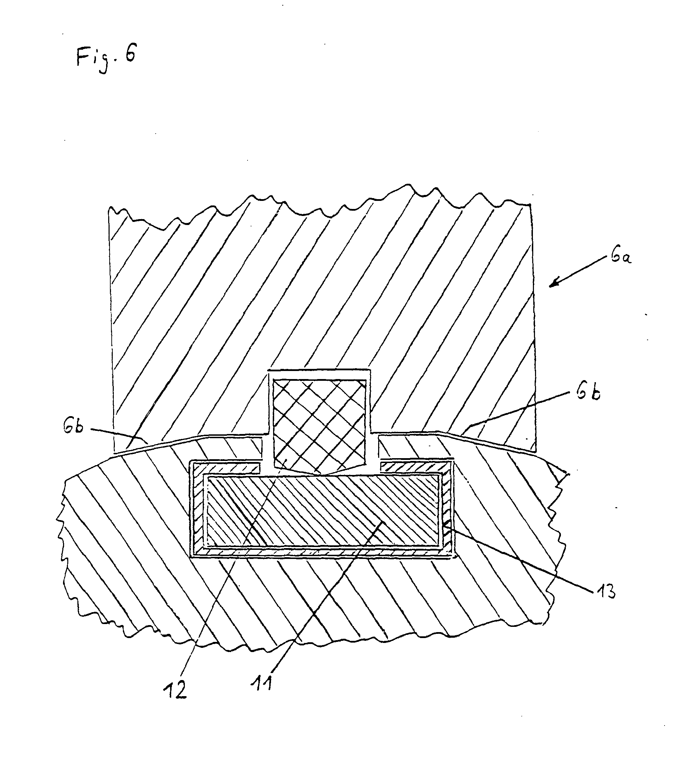

**Figur 6** zeit die Stromschiene, angeordnet in einer hinterschnittenen T-Nut der Laufschiene im Bereich der Lauffläche. Die Stromschiene ist in eine in der Nut angeordnete Isolationsschicht 13 eingebettet, die dafür sorgt, daß die Laufschiene von der Stromschiene elektrisch isoliert wird. An der freien Oberseite der Stromschiene 11 läuft der Stromabnehmer 12. In der Ausführung in Figur 6 ist der Stromabnehmer ein in der Laufrolle integriertes Bauteil vorzugsweise ringförmiges Element, welches in einer Ringnut in den Lauffläche der Laufrolle aufgenommen ist und leitend mit dem Antriebsmotor verbunden ist. Die Laufrolle in Figur 6 weist beiderseits der Aufnahmenut des Stromabnehmers tragende Laufflächen auf, die auf den Lauffläche der Laufschiene laufen. Die tragenden Laufflächen sind als ringförmige Außenflächen 6b des tragenden Laufrollenkörpers der Laufrolle ausgebildet.

In speziellen Beispielen kann der Transformator oder dessen Wicklungen in einem separaten Hohlraum oder separaten Hohlräumen des Laufschienengehäuses angeordnet sein.

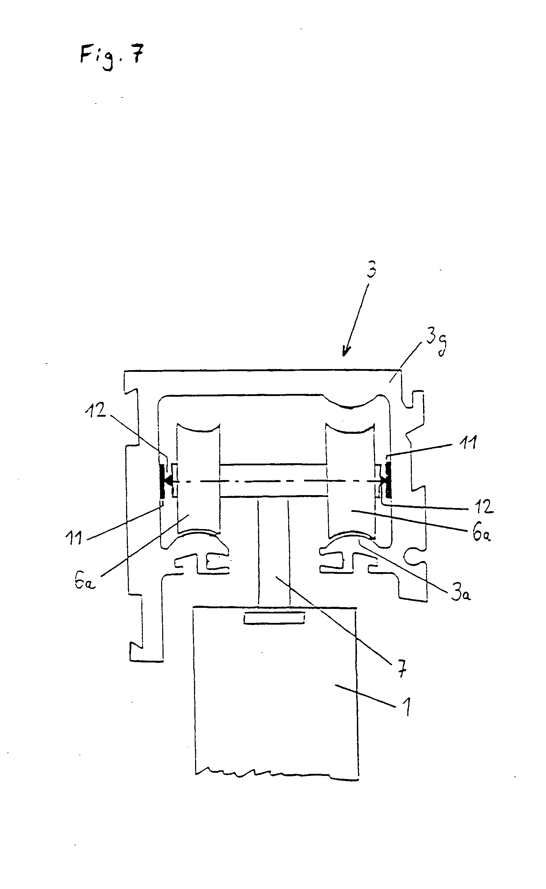

In **Figur 7** ist die Stromschiene in den gegenüberliegenden vertikalen Seitenwandung des Hohlraums angeordnet. Sie wirken mit den stirnseitigen Wellenenden der Laufrollen oder mit entsprechend ausgebildeten Stirnseiten der Laufrollen zusammen. Die Stromschiene in Figur 7 ist vorzugsweise federnd in der Innenwandung gelagert. Es kann eine separate Federeinrichtung hierfür vorgesehen sein oder die Isolationsschicht federnd ausgebildet sein.

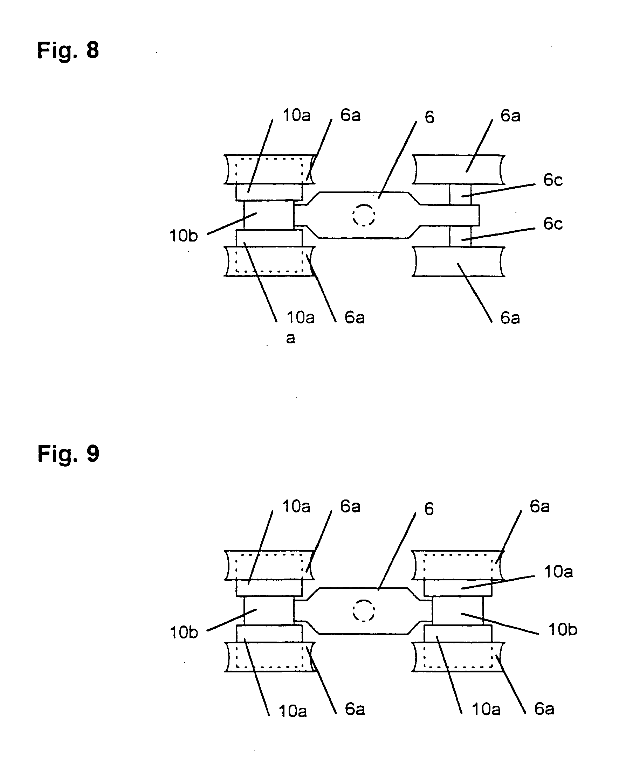

In den **Figuren 8 bis 14** werden verschiedene Ausführungsbeispiele zur Anordnung des Antriebsmotors im Rollenwagen dargestellt. Alle Ausführungsbeispiele weisen vier Laufrollen 6a auf, welche in einem Rollenwagen 6 gelagert sind. Jeweils zwei Laufrollen 6a weisen eine gemeinsame Achse 6c auf, müssen aber nicht unbedingt drehfest auf dieser Achse 6c befestigt sein. Der Rollenwagen 6 weist jeweils eine Aufhängeschraube 7 zur Aufhängung eines Türflügels 1, 2 auf.

**Figur 8** zeigt einen Rollenwagen 6 mit einem als Außenläufer-Motor ausgebildetem Antriebsmotor 10. Der Ständer 10b des Antriebsmotors 10 ist am Körper des Rollenwagens 6 befestigt und wird an seinen beiden Stirnseiten von jeweils einem drehbaren Außenläufer 10a umgeben, wobei der Außenläufer 10a jeweils in eine der angetriebenen Laufrollen 6a eingreift und mit dieser drehfest verbunden ist. Alternativ kann der Außenläufer 10a aber auch einstückig mit der Laufrolle 6a ausgebildet sein (nicht dargestellt). Die nicht angetriebenen Laufrollen 6a sind mittels der Achse 6c auf herkömmliche Weise im Rollenwagen 6 gelagert.

Das Ausführungsbeispiel in **Figur 9** unterscheidet sich vom vorangehenden Ausführungsbeispiel aus Figur 8 lediglich darin, daß anstelle der nicht angetriebenen Laufrollen 6a ein weiterer als Außenläufer-Motor ausgebildeter Antriebsmotor 10 angeordnet ist, so daß alle Laufrollen 6a des Rollenwagens 6 angetrieben sind.

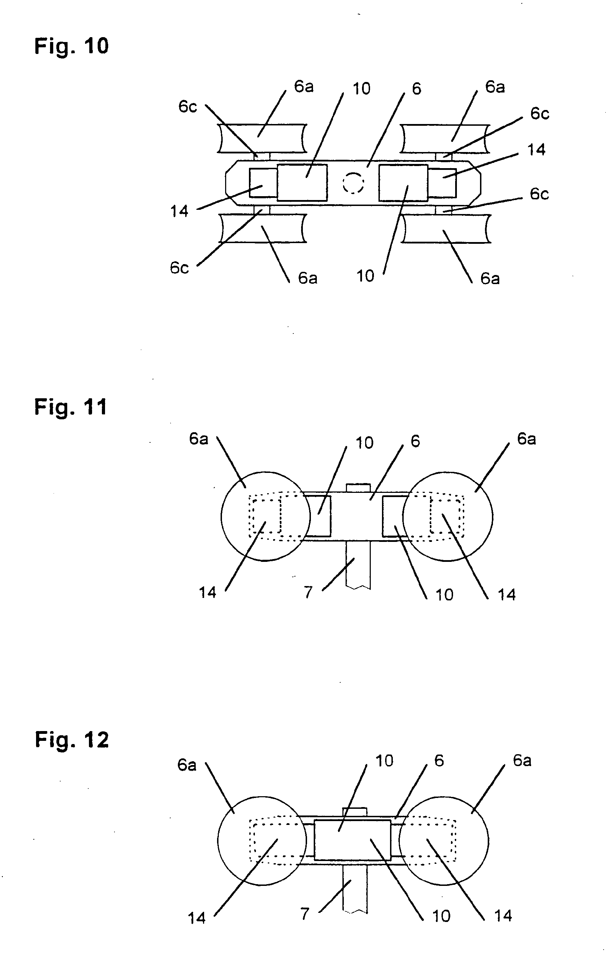

In **Figur 10** und **Figur 11** wird ein Rollenwagen mit zwei Antriebsmotoren 10 gezeigt, wobei die Abtriebswellen jeweils parallel zur Bewegungsrichtung des Rollenwagens 6 angeordnet sind. Zur Kraftübertragung vom Antriebsmotor 10 zu den angetriebenen Laufrollen 6a ist zwischen der Abtriebswelle des Antriebsmotors 10 und der Achse 6c der angetriebenen Laufrollen 6a jeweils ein als Winkelgetriebe ausgebildetes Getriebe 14 geschaltet. Das Getriebe 14 kann insbesondere als Kegelradgetriebe, Schneckengetriebe oder dergleichen ausgebildet sein.

Das in **Figur 12** dargestellte Ausführungsbeispiel zeigt prinzipiell dasselbe Antriebsprinzip wie in Figur 10 und 11, weist aber lediglich einen Antriebsmotor 10 auf, welcher zum Antrieb beider Laufrollenpaare 6a zwei Abtriebswellen an seinen entgegengesetzten Stirnseiten aufweist. Die Abtriebswelle wirken über jeweils ein Getriebe 14 auf jeweils eine Achse 6c der angetriebenen Laufrollen 6a. Soll nur ein Laufrollenpaar 6a angetrieben werden (nicht dargestellt), ist alternativ auch die Verwendung eines Antriebsmotors 10 mit nur einer Abtriebswelle denkbar.

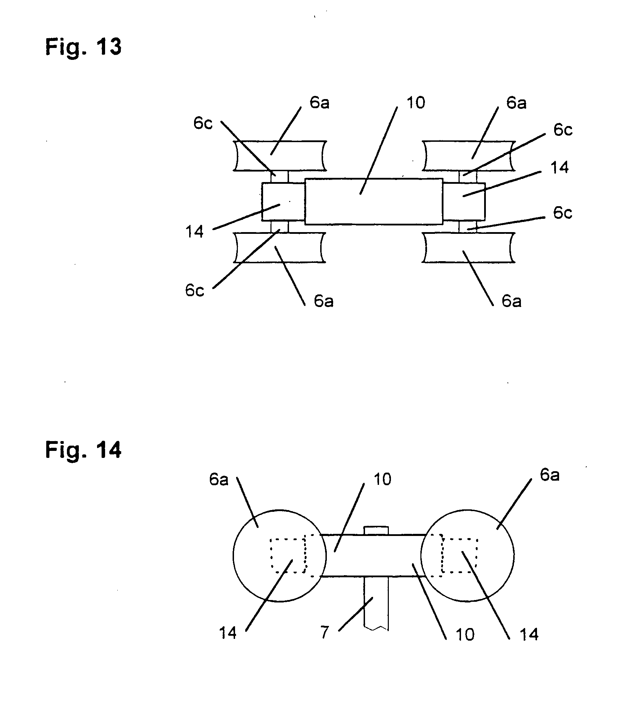

Auch das in den **Figur 13** und **14** dargestellte Ausführungsbeispiel arbeitet nach demselben Antriebsprinzip wie die vorangehenden Ausführungsbeispiele der Figuren 10 bis 12. Im Unterschied dazu stellt hier die Einheit aus Antriebsmotor 10 und Getriebe 14 den Rollenwagenkörper 6 selbst dar, wobei die Aufhängeschraube 7 direkt am Gehäuse des Antriebsmotors 10 befestigt ist und die Getriebe 14 die Achsen 6c der angetriebenen Laufrollen 6a lagernd aufnehmen.

Bei gegenüber den Beispielen in den Figuren abgewandelten Ausführungsbeispielen sind insbesondere folgende Ausgestaltungen möglich:

Die Laufschiene 3 kann aus mehreren vorgefertigten Profilteilen bestehen, welche je nach Einbausituation zusammengefügt, z.B. zusammengesteckt werden können. Die Laufbahn 3a der Laufschiene 3 und/oder die Lauffläche 6b der angetriebenen Laufrollen 6a ist bzw. sind vorteilhafterweise mit einem reibwerterhöhenden Belag ausgebildet, um einem Schlupf der angetriebenen Laufrollen 6a vorzubeugen. Gleichzeitig kann der reibwerterhöhende Belag auch geräuschdämmende Eigenschaften aufweisen.

Ist die Laufschiene 3 zumindest abschnittsweise gebogen ausgebildet, ist bei Anordnungen mit nebeneinanderliegenden Laufrollen 6a die Verwendung eines Differentialgetriebes oder dergleichen zwischen jeweils nebeneinanderliegenden angetriebenen Laufrollen 6a vorteilhaft. So Ist eine gleichmäßige, schlupffreie Drehmomentübertragung über beide nebeneinanderliegenden Laufrollen 6a gewährleistet. Bei Anordnungen mit mit konstantem Radius gebogener Laufschiene 3 ist ferner die Verwendung von nebeneinanderliegenden Laufrollen 6a mit unterschiedlichem Durchmesser denkbar, um einen schlupffreien Lauf zu erreichen.

Bei der Verwendung von Schleifkontakten 12 bei der Stromzuführung für den Antriebsmotor 10 ist die Anordnung mehrerer hintereinander- und/oder nebeneinanderliegender Schleifkontakte 12 pro Pol vorteilhaft, um Unterbrechungen der Energieübertragung vorzubeugen. Ferner können zusätzliche Reinigungsschleifer eingesetzt werden, die während der Bewegung des Flügels 1, 2 an der Stromschiene anhaftende Verunreinigungen entfernen bzw. aufnehmen.

Eine Steuerungseinrichtung des Antriebsmotors 10 mitsamt eventueller weiterer zusätzlicher elektrischer Einrichtungen kann flügelfest oder laufschienenfest angeordnet sein. Bei der flügelfesten Anordnung ist es besonders vorteilhaft, wenn die Steuerungseinrichtung bzw. die weiteren elektrischen Einrichtungen auf dem Rollenwagenprofil 6 vorzugsweise zwischen den stirnendseitigen Laufrollen 6a angeordnet sind und in dem Hohlraum der Laufschiene 3 aufgenommen geführt sind, in welchem auch die Laufbahn 3a für die Laufrollen 6a ausgebildet ist. Bei der laufschienenfesten Anordnung sind die betreffenden Einrichtungen vorzugsweise au-ßerhalb der Bewegungsbahn angeordnet, z.B. am stirnendseitigen Ende oder zwischen den Bewegungsbereichen zweier entgegenläufiger Rollenwagen 6. Die Einrichtungen können innerhalb des Hohlraums des Laufschienenprofils 3 inte-Einrichtungen können innerhalb des Hohlraums des Laufschienenprofils 3 integriert oder außerhalb stirnseitig anschließend in einer Fortsetzung des Profilgehäuses 3g oder in einem separaten Gehäuse angeordnet sein.

Der Antriebsmotor 10 und/oder die elektrischen Zusatzkomponenten, die z.B. als Mikrochip oder dergleichen ausgebildet sein können, können insbesondere in den aus Kunststoff bestehenden Rollenwagenkörper 6 eingegossen oder am Rollenwagenkörper 6 angegossen sein. Der Rollenwagenkörper 6 kann durch ein Spritzverfahren, insbesondere Spritzgußverfahren, hergestellt werden und das Ein- bzw. Angießen der elektrischen Zusatzeinrichtungen durch Spritztechnik, insbesondere Spritzgießtechnik, realisiert werden.

Die Daten- und/oder Signalübertragung zwischen elektrischen Zusatzeinrichtungen und/oder zwischen einer elektrischen Zusatzeinrichtung und dem elektrischen Antriebsmotor 10 kann über eine separate Stromschiene oder über die Stromschiene 12 zur Energieversorgung des Antriebsmotors 10 erfolgen. Im zweiten Falle werden die Daten und/oder Signale zwischen den elektrischen Zusatzeinrichtungen und/oder zwischen einer elektrischen Zusatzeinrichtung und dem elektrischen Antriebsmotor 10 auf die Versorgungsspannung des Antriebsmotors 10 aufmoduliert.

Die Weg- und/oder Geschwindigkeitserfassung der beweglichen Flügel 1, 2 kann mittels eines Drehimpulsgebers erfolgen; hierzu ist eine Vorrichtung zur Umwandlung der linearen Bewegung des Flügels 1, 2 in eine Drehbewegung erforderlich, z.B. ein umlaufender Riemen mit Riemenscheibe oder ein aufwickelbares Seil mit Seiltrommel oder ein anderes Getriebe, z.B. Zahnradgetriebe. Alternativ ist in einer bevorzugten Ausführungsform auch eine Positions- und/oder Geschwindigner bevorzugten Ausführungsform auch eine Positions- und/oder Geschwindigkeitsbestimmung der beweglichen Flügel 1, 2 mittels einer als Spannungsteiler ausgebildeten Stromschiene 12 und/oder Laufschiene 3 denkbar, wobei die an einem bestimmten Abschnitt der Stromschiene 12 und/oder der Laufschiene 3 abfallende Spannung zur Weg- und/oder Geschwindigkeitserfassung ausgewertet wird.

Um einen Schlupf der angetriebenen Laufrollen 6a zu erkennen und/oder zu verhindern, insbesondere beim Beschleunigen der Flügel 1, 2, kann die Steuerungseinrichtung des Antriebsmotors 10 eine Einrichtung zum Erkennen eines Schlupfes der angetriebenen Laufrollen 6a aufweisen, welche beim Auftreten von Schlupf das Drehmoment der angetriebenen Laufrollen 6a reduziert. Denkbar ist auch eine Einrichtung zur Begrenzung der maximalen Drehzahl- und/oder Drehmomentänderung in einer bestimmten Zeiteinheit.

Die Rollenwagen 6 können eine Verriegelungsvorrichtung gegen unbefugtes Bewegen der Flügel 1, 2 aufweisen. Beispielsweise kann die Verriegelung durch eine Verklemmung des Rollenwagens 6 gegenüber der Laufschiene 3 erfolgen; ebenso können die Rollenwagen 6 unterschiedlicher Flügel 1, 2 eine Vorrichtung zur gegenseitigen Verriegelung aufweisen. In einer bevorzugten Ausführungsform weisen die beweglichen Flügel 1, 2 jeweils einen separaten Antrieb zum Anheben und Absenken des Flügels 1, 2 auf; durch das Anheben bzw. Absenken des Flügels 1, 2 kann neben der Verriegelung auch eine Abdichtung des Flügels 1, 2 erzielt werden.

Die Steuerungseinrichtung kann an zentraler Stelle ortsfest oder beweglich angeordnet sein, wobei die einzelnen Motoren 10 oder Flügel 1, 2 nach einem "Multitasking"-Prinzip angesteuert werden können. In einer besonders bevorzugten Ausführungsform weist jeder Motor 10 bzw. jeder angetriebene Flügel 1, 2 eine separate Steuerungseinrichtung auf, welche gegebenenfalls mit den Steuerungseinrichtungen weiterer angetriebener Flügel 1, 2 und/oder mit einer übergeordneten Steuerungseinrichtung zusammenwirken kann. Durch diese Anordnung ist ein ten Steuerungseinrichtung zusammenwirken kann. Durch diese Anordnung ist ein äußerst flexibler Betrieb der Türanlage möglich: Beispielsweise kann eine im Normalbetrieb als Schiebe- oder Teleskoptür mit mehreren gegenläufig angetriebenen Flügeln 1, 2 betriebene Türanlage alternativ als Teleskoptür mit lediglich in einer Richtung mit unterschiedlichen Geschwindigkeiten angetriebenen Flügeln 1, 2 betrieben werden, wodurch Breite und/oder Position der Durchgangsöffnung dem jeweiligen Bedarf angepaßt werden können. In einer weiteren bevorzugten Ausführungsform sind die zentrale Steuerungseinrichtung bzw. die einzelnen Steuerungseinrichtung an eine zentrale Leittechnik oder dergleichen des Gebäudes angebunden, vorzugsweise über ein Bus-System oder dergleichen.

In einer besonders bevorzugten Ausführungsform ist eine Einrichtung zur Ermittlung der Türparameter, z.B. Endpositionen, Flügelgewicht oder dergleichen vorgesehen, wobei die Türparameter vorzugsweise bei Inbetriebsetzung und/oder nach Einschalten der Versorgungsspannung durch eine sogenannte "Lernfahrt" ermittelt und die ermittelten Türparameter in einem vorzugsweise nichtflüchtigen Speicher gespeichert werden.

Insbesondere bei dem Einsatz in Flucht- und Rettungswegen oder bei Brandschutztüren ist eine zuverlässige Öffnung bzw. Schließung der Tür auch bei Störungen einzelner Komponenten und/oder bei Ausfall der Energieversorgung durch des Netz notwendig. Hierzu ist eine Verwendung mehrerer Antriebsmotoren 10 pro bewegtem Flügel 1, 2 und/oder pro Rollenwagen 6 vorteilhaft, wobei eine Einrichtung zur Selbstdiagnose von Störungen sowie zur optischen und/oder akustischen Meldung von diagnostizierten Störungen eingesetzt werden kann. Ferner ist eine lösbare Kupplung oder dergleichen zur Entkopplung eines blockierten Antriebsmotors 10 oder Getriebes 14 sinnvoll. Ein Akku oder dergleichen kann die Energieversorgung bei Netzausfall übernehmen. Innerhalb des Hohlraums der Laufschiene 3 kann auch ein Hilfsmotor zum Öffnen und/oder Schließen eines Flügels 1, 2 vorgesehen sein, um den Flügel 1, 2 in die sicherheitsrelevante Position bewegen. Der Hilfsmotor kann als mechanischer Kraftspeicher, z.B. Feder, Gummizug oder Gasdruckfeder ausgebildet sein, welcher beim ersten Betätigen des Flügels 1, 2 Gasdruckfeder ausgebildet sein, welcher beim ersten Betätigen des Flügels 1, 2 gespannt wird und sodann arretiert gehalten wird. Die Auslösung erfolgt im Not- oder Störungsfall. Jeder Schiebeflügel 1, 2 kann mit einem separaten Hilfsmotor ausgestattet sein.

In einer besonders bevorzugten Ausführungsform wird der angetriebene Rollenwagen 6 mit dem Antriebsmotor 10 und gegebenenfalls mit mindestens einer elektrischen Zusatzeinrichtung wie z.B. Steuerungseinrichtung vorgefertigt geliefert, so daß bei einer Störung schnell der komplette Rollenwagen 6 ausgetauscht werden kann. Der Antriebsmotor 10 und/oder die elektrischen Zusatzkomponenten können insbesondere in den Rollenwagenkörper 6 eingegossen oder am Rollenwagenkörper 6 angegossen sein.

In einer weiteren bevorzugten Ausführungsform ist im oder am Flügel 1, 2 mindestens ein Sensor angeordnet, welcher z.B. einen von der Temperatur, der Windstärke und/oder -richtung, der Lichtstärke, der Feuchtigkeit oder dergleichen abhängigen Betrieb ermöglicht. Ferner können im oder am Flügel 1, 2 angeordnete Solarzellen oder dergleichen die Energieversorgung des Antriebsmotors 10, der Steuerung und/oder der elektrischen Zusatzkomponenten zumindest teilweise übernehmen. Ebenso ist eine elektronische Verdunkelungseinrichtung denkbar, vorzugsweise im Bereich einer Glasscheibe des Flügels 1, 2.

Zur Steuerung kann die Stromschiene 12 in bestimmten Streckenabschnitten unterschiedlich ausgebildet sein, z.B. abschnittsweise unterschiedlichen elektrischen Widerstand aufweisen, um auf diese Weise ein entsprechendes Bremsverhalten zu realisieren.

Die Anwendung der Erfindung ist hier am Beispiel einer Schiebetür-Anlage gezeigt; alternativ ist die Anwendung der Erfindung jedoch auch in Rundbogentür-, Karusselltür-, Teleskoptür-, Falttüranlagen sowie in Fenstern denkbar. Besonders vorteilhafte Ausführungsbeispiele sind bei Schiebetüranlagen mit einer Vielzahl von Flügelelementen 1, 2 möglich, die im geschlossenen Zustand eine fluchtende von Flügelelementen 1, 2 möglich, die im geschlossenen Zustand eine fluchtende Frontseite bilden und in geöffneter Stellung in eine rechtwinklig hierzu angeordnete Parkposition verfahrbar sind. Die mit separaten Antriebsmotoren 10 ausgestatteten Flügelelemente 1, 2 können jeweils unabhängig voneinander verfahren werden.

### Liste der Referenzzeichen

- 1: Flügel
- 1a: Festfeldflügel
- 2: Flügel
- 2a: Festfeldflügel
- 3: Laufschiene
- 3a: Laufbahn
- 3g: Profilgehäuse
- 5: Oberlichtflügel
- 6: Rollenwagen
- 6a: Laufrolle
- 6b: Lauffläche
- 6c: Achse
- 7: Aufhängeschraube
- 10: Antriebsmotor
- 10a: Außenläufer
- 10b: Ständer
- 11: Stromschiene
- 12: Stromabnehmer
- 13: Isolationsschicht
- 14: Getriebe

## Patentansprüche

1. Automatische Tür- oder Fensteranlage mit mindestens einem Flügel (1, 2),
mit einer elektrischen Antriebseinrichtung mit elektrischem Antriebsmotor (10),
mit einer ortsfesten Laufschiene (3), in der der Flügel (1, 2), über den Antriebsmotor (10) angetrieben, durch Laufrollen (6a) mindestens eines Rollenwagens (6) verschiebbar geführt ist,
und mit mindestens einer elektrischen Zusatzeinrichtung,
**dadurch gekennzeichnet,**
**dass** eine zweipolige Stromschiene (11) vorgesehen ist, die sowohl zur Stromversorgung des elektrischen Antriebsmotors (10) und/oder mindestens einer der elektrischen Zusatzeinrichtungen als auch zur Daten- und/oder Signalübertragung zwischen elektrischen Zusatzeinrichtungen und/oder zwischen mindestens einer der elektrischen Zusatzeinrichtungen und dem elektrischen Antriebsmotor (10) ausgebildet ist,
wobei die Daten und/oder Signale zwischen den elektrischen Zusatzeinrichtungen und/oder zwischen mindestens einer der elektrischen Zusatzeinrichtungen und dem elektrischen Antriebsmotor (10) auf die Versorgungsspannung des Antriebsmotors (10) über eine Übertragungseinrichtung aufmodulierbar sind.

2. Automatische Tür- oder Fensteranlage nach Anspruch 1,
**dadurch gekennzeichnet, dass** als Einrichtung zur Kommunikation mehrerer elektrischer Zusatzeinrichtungen untereinander und/oder mit einer übergeordneten Steuerungseinrichtung ein Bus-System vorgesehen ist.

3. Automatische Tür- oder Fensteranlage nach Anspruch 2,
**dadurch gekennzeichnet, dass** die Stromschiene (11) als Bestandteil des Bus-Systems ausgebildet ist.

4. Automatische Tür- oder Fensteranlage nach Anspruch 1,
**dadurch gekennzeichnet, dass** als elektrische Zusatzeinrichtung eine Steuerungseinrichtung vorhanden ist.

5. Automatische Tür- oder Fensteranlage nach Anspruch 1,
**dadurch gekennzeichnet, dass** als elektrische Zusatzeinrichtung ein Transformator vorhanden ist.

6. Automatische Tür- oder Fensteranlage nach Anspruch 1,
**dadurch gekennzeichnet, dass** als elektrische Zusatzeinrichtung eine Notstromversorgungseinrichtung vorhanden ist.

7. Automatische Tür- oder Fensteranlage nach Anspruch 1,
**dadurch gekennzeichnet, dass** als elektrische Zusatzeinrichtung eine Ansteuereinrichtung vorhanden ist.

8. Automatische Tür- oder Fensteranlage nach Anspruch 1,
**dadurch gekennzeichnet, dass** als elektrische Zusatzeinrichtung eine Lichtschranke vorhanden ist.

9. Automatische Tür- oder Fensteranlage nach Anspruch 1,
**dadurch gekennzeichnet, dass** als elektrische Zusatzeinrichtung Sensoren vorhanden sind.

10. Automatische Tür- oder Fensteranlage nach Anspruch 9,
**dadurch gekennzeichnet,dass**dieSensorensoausgebildet und angeordnet sind, dass die unterschiedlich steuerbaren Flügel (1, 2) abhängig von bestimmten Umwelteinflüssen, wie Temperatur, Feuchtigkeit oder Lichtstärke, steuerbar sind.

11. Automatische Tür- oder Fensteranlage nach Anspruch 1,
**dadurch gekennzeichnet, dass** als elektrische Zusatzeinrichtung eine Fehlererkennungseinrichtung vorgesehen ist zur selbsttätigen Erkennung von Störungen an der Steuerungseinrichtung oder der Stromübertragung (11, 12) oder dem Antriebsmotor (10) oder dem Getriebe (14) oder der Laufrolle (6a) oder der Laufschiene (3).

12. Automatische Tür- oder Fensteranlage nach Anspruch 11,
**dadurch gekennzeichnet, dass** die Fehlererkennungseinrichtung so ausgebildet und angeordnet ist, dass die Reaktion auf eine gegebenenfalls auftretende Störung automatisch erfolgt.

13. Automatische Tür- oder Fensteranlage nach Anspruch 11,
**dadurch gekennzeichnet, dass** eine optische Anzeigeeinrichtung für eine gegebenenfalls auftretende Störung vorgesehen ist.

14. Automatische Tür- oder Fensteranlage nach Anspruch 11,
**dadurch gekennzeichnet, dass** eine akustische Anzeigeeinrichtung für eine gegebenenfalls auftretende Störung vorgesehen ist.

15. Automatische Tür- oder Fensteranlage nach Anspruch 1,
**dadurch gekennzeichnet, dass** als elektrische Zusatzeinrichtung eine Einrichtung zur Weg- und/oder Geschwindigkeitserfassung des Flügels (1, 2) vorgesehen ist.

16. Automatische Tür- oder Fensteranlage nach Anspruch 1,
**dadurch gekennzeichnet, dass** als elektrische Zusatzeinrichtung im oder am Rollenwagen eine Verriegelungseinrichtung zur Verriegelung des Rollenwagens gegenüber der Laufschiene vorgesehen ist.

17. Automatische Tür- oder Fensteranlage nach Anspruch 16,
**dadurch gekennzeichnet, dass** die Verriegelungseinrichtung so ausgebildet und angeordnet ist, dass sich der RollenWagen in Verriegelungsstellung gegenüber der Laufschiene verklemmt, oder dass sich mindestens zwei Rollenwagen unterschiedlicher Flügel miteinander verhaken.

18. Automatische Tür- oder Fensteranlage nach Anspruch 1,
**dadurch gekennzeichnet, dass** als elektrische Zusatzeinrichtung im oder am Flügel mindestens ein als Elektromotor ausgebildeter, zusätzlicher Antrieb zum Anheben und Absenken des Flügels oder einer beweglichen Dichtung angeordnet ist, wobei das Anheben bzw. Absenken des Flügels eine Abdichtung und/oder Verriegelung des Flügels bewirkt.

19. Automatische Tür- oder Fensteranlage nach Anspruch 1,
**dadurch gekennzeichnet, dass** mehrere über separate Antriebsmotoren (10) angetriebene Flügel (1, 2) vorgesehen sind, wobei einer oder mehrere Flügel (1, 2) in Abhängigkeit von der Bewegung eines anderen Flügels (1, 2) bzw. mehrerer anderer Flügel (1, 2) steuerbar ist bzw. sind.

20. Automatische Tür- oder Fensteranlage nach Anspruch 1,
**dadurch gekennzeichnet, dass** mehrere über separate Antriebsmotoren (10) angetriebene Flügel (1, 2) vorgesehen sind, wobei mehrere Flügel (1, 2) mittels einer gemeinsamen Steuerungseinrichtung gesteuert werden.

21. Automatische Tür- oder Fensteranlage nach Anspruch 20,
**dadurch gekennzeichnet, dass** die einzelnen Flügel (1, 2) parallel nach einem Multitasking-Prinzip steuerbar sind.

22. Automatische Tür- oder Fensteranlage nach Anspruch 1,
**dadurch gekennzeichnet, dass** mehrere über separate Antriebsmotoren (10) angetriebene Flügel (1, 2) vorgesehen sind, wobei jeder angetriebene Flügel (1, 2) eine separate Steuerungseinrichtung aufweist.

23. Automatische Tür- oder Fensteranlage nach Anspruch 1,
**dadurch gekennzeichnet, dass** eine Synchronisationseinrichtung vorgesehen ist zur synchronen Steuerung mehrerer Antriebsmotoren (10).

24. Automatische Tür- oder Fensteranlage nach Anspruch 1,
**dadurch gekennzeichnet, dass** die Steuerungseinrichtung mit einem Gebäude-Leittechnik-System verbunden ist.

25. Automatische Tür- oder Fensteranlage nach Anspruch 24,
**dadurch gekennzeichnet, dass** die Steuerungseinrichtung über ein Bus-System mit dem Gebäude-Leittechnik-System verbunden ist.

## Claims

1. Automatic door or window system with at least one leaf (1, 2),
having an electrical drive device comprising an electric drive motor (10),
having a stationary running rail (3) in which the leaf (1, 2) is movably guided by running rollers (6a) of at least one rolling carriage (6) in a manner driven by the drive motor (10),
and having at least one auxiliary electrical device,
**characterized in that** a two-pole busbar (11) is provided which is designed both to supply current to the electric drive motor (10) and/or at least one of the auxiliary electrical devices and also to transmit data and/or signals between auxiliary electrical devices and/or between at least one of the auxiliary electrical devices and the electric drive motor (10),
it being possible to modulate the data and/or signals between the auxiliary electrical devices and/or between at least one of the auxiliary electrical devices and the electric drive motor (10) onto the supply voltage of the drive motor (10) by means of a transmission device.

2. Automatic door or window system according to Claim 1, **characterized in that** a bus system is provided as the device for enabling a plurality of auxiliary electrical devices to communicate with one another and/or with a superordinate control device.

3. Automatic door or window system according to Claim 2, **characterized in that** the busbar (11) is in the form of a constituent part of the bus system.

4. Automatic door or window system according to Claim 1, **characterized in that** the auxiliary electrical device is a control device.

5. Automatic door or window system according to Claim 1, **characterized in that** the auxiliary electrical device is a transformer.

6. Automatic door or window system according to Claim 1, **characterized in that** the auxiliary electrical device is an emergency power-supply device.

7. Automatic door or window system according to Claim 1, **characterized in that** the auxiliary electrical device is an actuating device.

8. Automatic door or window system according to Claim 1, **characterized in that** the auxiliary electrical device is a light barrier.

9. Automatic door or window system according to Claim 1, **characterized in that** the auxiliary electrical device comprises sensors.

10. Automatic door or window system according to Claim 9, **characterized in that** the sensors are designed and arranged such that the leaves (1, 2), which can be controlled differently, can be controlled as a function of specific environmental influences such as temperature, humidity or light intensity.

11. Automatic door or window system according to Claim 1, **characterized in that** a fault identification device is provided as the auxiliary electrical device in order to automatically identify malfunctions in the control device or the power transmission means (11, 12) or the drive motor (10) or the gear mechanism (14) or the running roller (6a) or the running rail (3).

12. Automatic door or window system according to Claim 11, **characterized in that** the fault identification device is designed and arranged such that it reacts automatically to any malfunction which may occur.

13. Automatic door or window system according to Claim 11, **characterized in that** a visual display device is provided for any malfunction which may occur.

14. Automatic door or window system according to Claim 11, **characterized in that** an acoustic display device is provided for any malfunction which may occur.

15. Automatic door or window system according to Claim 1, **characterized in that** a device for detecting the travel and/or speed of the leaf (1, 2) is provided as the auxiliary electrical device.

16. Automatic door or window system according to Claim 1, **characterized in that** a locking device for locking the rolling carriage with respect to the running rail is provided in or on the rolling carriage as the auxiliary electrical device.

17. Automatic door or window system according to Claim 16, **characterized in that** the locking device is designed and arranged such that the rolling carriage is fixed with respect to the running rail in the locking position, or **in that** at least two rolling carriages of different leaves interlock.

18. Automatic door or window system according to Claim 1, **characterized in that** at least one additional drive, which is in the form of an electric motor, for raising and lowering the leaf or a movable seal is arranged in or on the leaf as the auxiliary electrical device, with the leaf being sealed and/or locked by the said leaf being raised or lowered.

19. Automatic door or window system according to Claim 1, **characterized in that** a plurality of leaves (1, 2) which are driven by separate drive motors (10) are provided, it being possible to control one or more leaves (1, 2) as a function of the movement of another leaf (1, 2) or a plurality of other leaves (1, 2).

20. Automatic door or window system according to Claim 1, **characterized in that** a plurality of leaves (1, 2) which are driven by separate drive motors (10) are provided, with a plurality of leaves (1, 2) being controlled by means of a common control device.

21. Automatic door or window system according to Claim 20, **characterized in that** the individual leaves (1, 2) can be controlled in parallel in accordance with a multitasking principle.

22. Automatic door or window system according to Claim 1, **characterized in that** a plurality of leaves (1, 2) which are driven by separate drive motors (10) are provided, with each driven leaf (1, 2) having a separate control device.

23. Automatic door or window system according to Claim 1, **characterized in that** a synchronization device is provided in order to synchronously control a plurality of drive motors (10).

24. Automatic door or window system according to Claim 1, **characterized in that** the control device is connected to a control system of a building.

25. Automatic door or window system according to Claim 24, **characterized in that** the control device is connected to the control system of a building via a bus system.

## Revendications

1. Système automatique de porte ou de fenêtre qui présente au moins un panneau (1, 2), un dispositif d'entraînement doté d'un moteur électrique d'entraînement (10), un rail de déplacement (3) fixe dans lequel le panneau (1, 2) est guidé à déplacement sous l'entraînement du moteur d'entraînement (10) par des galets de déplacement (6a) d'au moins un chariot (6) à galets, et au moins un dispositif électrique supplémentaire, **caractérisé en ce que** il est prévu un rail de courant (11) à deux pôles qui est configuré à la fois pour alimenter en courant le moteur électrique d'entraînement (10) et/ou au moins un des dispositifs électriques supplémentaires et pour transmettre des données et/ou des signaux entre les dispositifs électriques supplémentaires et/ou entre au moins un dispositif électrique supplémentaire et le moteur électrique d'entraînement (10),
les données et/ou les signaux entre les dispositifs électriques supplémentaires et/ou entre au moins l'un des dispositifs électriques supplémentaires et le moteur électrique d'entraînement (10) pouvant être modulés sur la tension d'alimentation du moteur d'entraînement (10) par un dispositif de transmission.

2. Système automatique de porte ou de fenêtre selon la revendication 1, **caractérisé en ce qu'**un système de bus est prévu comme dispositif de communication entre plusieurs dispositifs électriques supplémentaires et/ou avec un dispositif de commande d'ordre hiérarchique supérieur.

3. Système automatique de porte ou de fenêtre selon la revendication 2, **caractérisé en ce que** le rail du courant (11) fait partie du système de bus.

4. Système automatique de porte ou de fenêtre selon la revendication 1, **caractérisé en ce qu'**un dispositif de commande est prévu comme dispositif électrique supplémentaire.

5. Système automatique de porte ou de fenêtre selon la revendication 1, **caractérisé en ce qu'**un transformateur est prévu comme dispositif électrique supplémentaire.

6. Système automatique de porte ou de fenêtre selon la revendication 1, **caractérisé en ce qu'**un dispositif d'alimentation en courant de secours est prévu comme dispositif électrique supplémentaire.

7. Système automatique de porte ou de fenêtre selon la revendication 1, **caractérisé en ce qu'**un dispositif de commande est prévu comme dispositif électrique supplémentaire.

8. Système automatique de porte ou de fenêtre selon la revendication 1, **caractérisé en ce qu'**une barrière lumineuse est prévue comme dispositif électrique supplémentaire.

9. Système automatique de porte ou de fenêtre selon la revendication 1, **caractérisé en ce que** des détecteurs sont prévus comme dispositif électrique supplémentaire.

10. Système automatique de porte ou de fenêtre selon la revendication 9, **caractérisé en ce que** les détecteurs sont configurés et disposés de manière à pouvoir commander les différents panneaux (1, 2) commandés séparément, en fonction de certaines influences de l'environnement comme la température, l'humidité ou l'intensité de la lumière.

11. Système automatique de porte ou de fenêtre selon la revendication 1, **caractérisé en ce qu'**un dispositif de détection d'erreurs est prévu comme dispositif électrique supplémentaire pour détecter automatiquement des défaillances du dispositif de commande ou de la transmission du courant (11, 12), du moteur d'entraînement (10), de la transmission (14), du galet de déplacement (6a) ou du rail de déplacement (3).

12. Système automatique de porte ou de fenêtre selon la revendication 11, **caractérisé en ce que** le dispositif de détection d'erreurs est configuré et disposé de telle sorte que la réaction à une défaillance éventuelle a lieu automatiquement.

13. Système automatique de porte ou de fenêtre selon la revendication 11, **caractérisé en ce qu'**il est prévu un dispositif d'affichage optique d'une défaillance éventuelle.

14. Système automatique de porte ou de fenêtre selon la revendication 11, **caractérisé en ce qu'**il est prévu un dispositif d'affichage acoustique d'une défaillance éventuelle.

15. Système automatique de porte ou de fenêtre selon la revendication 1, **caractérisé en ce qu'**un dispositif de détection de la position et/ou de la vitesse du panneau (1, 2) est prévu comme dispositif électrique supplémentaire.

16. Système automatique de porte ou de fenêtre selon la revendication 1, **caractérisé en ce qu'**un dispositif de verrouillage qui verrouille le chariot à galets par rapport au rail de déplacement est prévu comme dispositif électrique supplémentaire sur ou dans le chariot à galets.

17. Système automatique de porte ou de fenêtre selon la revendication 16, **caractérisé en ce que** le dispositif de verrouillage est configuré et disposé de manière à bloquer le chariot à galets en position verrouillée sur le rail de déplacement ou de telle sorte qu'au moins deux chariots à galets de panneaux différents s'accrochent les uns aux autres.

18. Système automatique de porte ou de fenêtre selon la revendication 1, **caractérisé en ce qu'**au moins un entraînement supplémentaire, configuré comme moteur électrique, qui relève et abaisse le panneau ou assure une étanchéité mobile est prévu comme dispositif électrique supplémentaire dans ou sur le panneau, le relèvement et l'abaissement du panneau ayant pour résultat la fermeture étanche et/ou le verrouillage du panneau.

19. Système automatique de porte ou de fenêtre selon la revendication 1, **caractérisé en ce que** sont prévus plusieurs panneaux (1, 2) entraînés par des moteurs d'entraînement (10) séparés, un ou plusieurs panneaux (1, 2) étant commandés ou pouvant l'être en fonction du déplacement d'un autre panneau (1, 2) ou selon le cas de plusieurs autres panneaux (1, 2).

20. Système automatique de porte ou de fenêtre selon la revendication 1, **caractérisé en ce que** sont prévus plusieurs panneaux (1, 2) entraînés par des moteurs d'entraînement (10) séparés, plusieurs panneaux (1, 2) étant commandés au moyen d'une installation commune de commande.

21. Système automatique de porte ou de fenêtre selon la revendication 20, **caractérisé en ce que** les différents panneaux (1, 2) peuvent être commandés en parallèle selon le principe dit "multitâches".

22. Système automatique de porte ou de fenêtre selon la revendication 1, **caractérisé en ce que** sont prévus plusieurs panneaux (1, 2) entraînés par des moteurs d'entraînement (10) séparés, chaque panneau entraîné (1, 2) présentant un dispositif séparé de commande.

23. Système automatique de porte ou de fenêtre selon la revendication 1, **caractérisé en ce qu'**il est prévu une unité de synchronisation qui permet une commande synchronisée de plusieurs moteurs d'entraînement (10).

24. Système automatique de porte ou de fenêtre selon la revendication 1, **caractérisé en ce que** le dispositif de commande est relié à un système de gestion technique intégré d'un bâtiment.

25. Système automatique de porte ou de fenêtre selon la revendication 24, **caractérisé en ce que** le dispositif de commande est relié par l'intermédiaire d'un système de bus au système de gestion technique intégrée du bâtiment.
